# EUROPÄISCHE PATENTANMELDUNG

(11) **EP 1 184 612 A2**
(43) Veröffentlichungstag der Anmeldung: **06.03.2002**
(21) Anmeldenummer: 01810804.3
(22) Anmeldetag: 20.08.2001
(51) Int. Cl.: F16L 5/10

(54) **Verfahren und Vorrichtung zur Spaltabdichtung**

(30) Priorität: 01.09.2000 DE 10043192
(71) Anmelder: HILTI Aktiengesellschaft, 9494 Schaan (LI)
(72) Erfinder: Huber, Silvia, 86356 Neusäss (DE); Vogel, Peter, 86836 Untermeitingen (DE); Nuesch, Heiri, 9475 Sevelen (CH); Kögler, Markus, 86807 Buchloe (DE)
(74) Vertreter: Wildi, Roland

(57) **Zusammenfassung**

Zum Abdichten eines Raums (4) zwischen einer in einem Bauelement (1) vorhandenen Durchführung (2) und wenigstens einem die Durchführung (2) durchragenden Gegenstand (3) kommt eine Abdichtvorrichtung zum Einsatz, die einen die Durchführung (2) einschließenden Trägerrahmen (6) aufweist, der eine elastische Membran (7) aufspannt, durch die der Gegenstand (3) hindurchführbar ist. Der Trägerrahmen (6) wird dichtend am Bauelement (1) befestigt, während andererseits die elastische Membran (7) zum Gegenstand (3) abdichtet.

## Beschreibung

Die Erfindung betrifft Verfahren gemäß den Oberbegriffen der nebengeordneten Patentansprüche 1 und 2 zum Abdichten eines Hohlraums bzw. Spalts zwischen einer in einem Bauelement vorhandenen Durchführung und wenigstens einem die Durchführung durchragenden Gegenstand, sowie eine hierzu geeignete Vorrichtung gemäß dem Oberbegriff des Patentanspruchs 9.

Bei der Abdichtung von zum Beispiel Hauseinführungen, bei denen etwa Rohre oder Kabel von außen nach innen durch Durchgangsöffnungen in Wänden hindurchgeführt werden, entsteht in der Regel ein Hohlraum bzw. Ringspalt zwischen Rohr bzw. Kabel und Wand, der sich auf unterschiedliche Weise abdichten läßt. Zum einen können mechanische Abdichtungen zum Einsatz kommen. Hierbei werden feste Dichtelemente in den Hohlraum bzw. Spalt eingeführt und dichten diesen über Formschluß oder elastische Verpressung zum Untergrund ab. Zum anderen können rein chemische Abdichtungen verwendet werden. Hier wird der Hohlraum bzw. Ringspalt mit reaktiven chemischen Systemen ausgefüllt, die aushärten und den Hohlraum bzw. Ringspalt verschließen. Zum Einsatz kommen anorganische Systeme, etwa Mörtel, oder dergleichen, oder organische Systeme, wie zum Beispiel Dichtmassen, Polymerschäume, usw.. Nicht zuletzt können aber auch chemisch-mechanische Abdichtungen benutzt werden. Dabei wird in der Regel eine mechanische Verschalung der stirnseitigen Enden des Hohlraums bzw. Ringspalts vorgenommen, wobei die Verschalung ein chemisches Füllsystem aufnimmt.

Mechanische Lösungen sind teuer, zeit- und arbeitsaufwendig bei der Installation und in der Regel auf bestimmte Rohr-/Kabel- und Wandöffnungsdurchmesser fixiert. Chemische Lösungen, die das Ausfüllen des Ringspalts mit Dichtmassen, Schäumen oder Mörtel betreffen, haben diese Nachteile nicht, gewährleisten jedoch im allgemeinen keine dauerhafte Abdichtung gegen eintretende Feuchtigkeit bzw. Flüssigkeiten, wie etwa Wasser. Dies liegt zum einen häufig an der Durchlässigkeit des Materials selbst, wenn offenzellige Schäume verwendet werden, sowie an der mangelnden Haftung auf verschiedenen kritischen Untergründen als auch daran, daß der Anwender die verbleibende Durchgangsöffnung nicht vollständig ausschäumt.

Der Erfindung liegt die Aufgabe zugrunde, ein Verfahren und eine Vorrichtung der eingangs genannten Art so weiterzubilden, daß ein Hohlraum bzw. Spalt der genannten Art unter Verwendung einfacher Mittel möglichst schnell und sicher abgedichtet werden kann. Die Abdichtung soll darüber hinaus auch dauerhaft dicht gegen Eintritt von Feuchtigkeit bzw. Wasser sein.

Verfahrensseitige Lösungen der gestellten Aufgabe sind in den kennzeichnenden Teilen der nebengeordneten Patentansprüche 1 und 2 angegeben. Dagegen findet sich die vorrichtungsseitige Lösung der gestellten Aufgabe im kennzeichnenden Teil des Patentanspruchs 9. Vorteilhafte Ausgestaltungen der Erfindung sind den jeweils nachgeordneten Unteransprüchen zu entnehmen.

Die der Erfindung zugrundeliegende Idee besteht darin, eine in einem Bauelement vorhandene Durchführung, durch die ein oder mehrere strangförmige Gegenstände hindurchgeführt sind, stirnseitig durch eine Membran abzudichten. Bei der Membran handelt es sich um eine elastische Membran, die von einem Trägerrahmen aufgespannt ist. Dabei sind der Trägerrahmen bzw. die Membran so groß, daß sie die Durchführung vollständig abdecken. Die Durchführung kann dabei zylindrisch sein oder eine andere Querschnittsform, auch eine unregelmäßige, aufweisen. Der Trägerrahmen wird mit einer Fläche des Bauelements verbunden, derart, daß er die Durchführung dichtend umgibt. Andererseits durchlaufen die in der Durchführung vorhandenen strangförmigen Gegenstände durch die Membran hindurch, wobei sich die Membran aufgrund ihrer Elastizität eng an die Gegenstände anschmiegt, wodurch auch in diesem Bereich ein Dichtungseffekt erzielt wird. Die Membran ist dabei aufgrund ihrer Beschaffenheit bzw. Elastizität in der Lage, auch unterschiedliche Durchmesser aufweisende strangförmige Gegenstände aufzunehmen, so daß idealerweise keine weiteren Abdicht-Nacharbeiten nötig sind.

Nach einer ersten Variante des erfindungsgemäßen Verfahrens wird also die Durchführung durch eine von einem Trägerrahmen aufgespannte elastische Membran abgedeckt, indem der Trägerrahmen mit dem Bauelement dichtend verbunden wird, und daß anschließend der Gegenstand durch die Membran hindurchgeführt wird. Vorzugsweise kann dies so geschehen, daß der Gegenstand nach Hindurchführen durch die Membran in die Durchführung des Bauelements gelangt. Die Bewegung des Gegenstands könnte aber auch in der entgegengesetzten Richtung erfolgen, so daß er zunächst durch die Durchführung hindurchgeführt wird und dann erst quasi von hinten die Membran durchsetzt. Im zuletzt genannten Fall müßte die Membran allerdings zuvor so fest am Bauelement befestigt sein, daß sie sich von diesem nicht wieder löst, wenn der Gegenstand durch sie von hinten hindurchgeschoben wird.

Nach einer anderen Variante des erfindungsgemäßen Verfahrens kann aber auch auf ein Ende eines bereits in der Durchführung vorhandenen Gegenstands eine von einem Trägerrahmen aufgespannte elastische Membran derart aufgesetzt werden, daß sie der Gegenstand durchsetzt, wonach der Trägerrahmen mit dem Bauelement dichtend verbunden wird. Zu diesem Zweck kann entweder die Membran relativ zum Gegenstand auf das Bauelement zu verschoben werden oder zusammen mit dem Gegenstand.

Beide Varianten ermöglichen eine sehr schnelle und effektive Abdichtung der Durchführung, da sowohl der Trägerrahmen dicht am Bauelement anliegt und die Membran aufgrund ihrer elastischen Eigenschaften den wenigstens einen sie durchsetzenden Gegenstand dichtend umgibt. Zur Erzielung einer dichtenden Verbindung zwischen Trägerrahmen und Bauelement kann der Trägerrahmen mit letzterem verklebt werden, so daß die Befestigung und die Abdichtung in einem Arbeitsgang durchgeführt werden können, was die Montagezeit verkürzt. Zu diesem Zweck kann der Trägerrahmen zum Beispiel mit einer klebrigen Beschichtung versehen sein. Natürlich sind aber auch andere Formen der Befestigung bzw. Abdichtung in diesem Bereich möglich. Darüber hinaus kann der Trägerrahmen jede geeignete Form aufweisen, also etwa als rechteckiger, ovaler oder kreisrunder Rahmen ausgebildet sein. Dies hängt u. a. von der Struktur der Durchführung und der Anzahl der die Durchführung durchlaufenden strangförmigen Gegenstände ab. Ist die Durchführung kreisrund im Querschnitt und wird sie nur von einem strangförmigen Gegenstand durchsetzt, so ist der Trägerrahmen vorzugsweise als Ring ausgebildet. In diesem Fall durchsetzt der strangförmige Gegenstand die Membran in deren Zentrum. Befinden sich dagegen in der Durchführung zwei im Abstand zueinanderliegende strangförmige Gegenstände, so könnte der Trägerrahmen zum Beispiel ellipsenförmig ausgebildet sein, so daß sich die strangförmigen Gegenstände dann in den jeweiligen Brennpunkten der Ellipse positionieren ließen, um dadurch für eine besonders gut dichtende Anlage der Membran an die Gegenstände zu sorgen.

Als Membran kann eine solche mit wenigstens einer Membranwand zum Einsatz kommen. Diese Membranwand schmiegt sich elastisch an den Umfang des sie durchsetzenden strangförmigen Gegenstandes an und sorgt somit in dessen Umfangsbereich für eine gute Spaltabdichtung. Durch Wahl der elastischen Eigenschaften des Membranwandmaterials und durch Wahl einer geeigneten Dicke der Membranwand kann darüber hinaus unterschiedlichen Abdichtanforderungen Rechnung getragen werden.

In Weiterbildung der Erfindung können auch mehrere solcher Membranwände im Abstand nebeneinander angeordnet sein, die mit einem gemeinsamen Trägerring verbunden sind, um auf diese Weise die Abdichtwirkung der Membran zu vergrößern.

Die Membranwände können an vorbestimmten Stellen bereits Öffnungen für den Durchtritt der strangförmigen Gegenstände aufweisen, wobei diese Öffnungen im Querschnitt dann kleiner sind als die Querschnitte der strangförmigen Gegenstände, die durch diese Öffnungen hindurchgeführt werden sollen. Dadurch liegt die Membran im Umfangsbereich der Öffnungen eng an den Außenumfängen der strangförmigen Gegenstände an. Möglich ist es aber auch, als Membranwände zunächst geschlossene Wände zu verwenden, die dann beim Hindurchführen der Gegenstände durch die Membran zerstört werden. Dadurch ergibt sich ein besonders enger Kontakt zwischen Membran und hindurchgeführtem Gegenstand, was einen noch besseren Abdichteffekt mit sich bringt.

In noch weiterer Ausgestaltung der Erfindung kann als Membran aber auch eine solche mit mehreren im Abstand zueinanderliegenden Membranwänden zum Einsatz kommen, zwischen denen sich ein Abdichtmittel befindet, zum Beispiel eine zähe Flüssigkeit, etwa ein Gel oder Hydrogel. Handelt es sich bei dieser Membran um eine solche mit geschlossenen Membranwänden, so werden diese beim Hindurchführen des strangförmigen Gegenstands durch die Membran hindurch zerstört und legen sich eng an den strangförmigen Gegenstand an. Die zähe Flüssigkeit kann nicht austreten, da dies durch die elastisch am strangförmigen Gegenstand anliegenden Membranwände verhindert wird. Dagegen baut sich aufgrund der Verdrängung der Flüssigkeit im Innern der Membran ein Innendruck zwischen den Membranwänden auf, wodurch zum strangförmigen Gegenstand hin weiter abgedichtet wird. Die zähe Flüssigkeit wirkt somit als zusätzlich dichtendes Mittel.

Als dichtendes Mittel muß aber nicht unbedingt eine zähe Flüssigkeit verwendet werden. Vielmehr können als Abdichtmittel (festes) auch eine feinkörnige Substanz oder ein Puder vorgesehen sein.

Dabei kann das Abdichtmittel auch quellfähige Eigenschaften aufweisen. Die zähe Flüssigkeit, die feinkörnige Substanz bzw. der Puder dienen zunächst als Abdichtung gegen Staub (zusammen mit den Membranwänden). Zusätzliche Abdichtung gegen Feuchtigkeit bzw. Eintritt von Wasser oder anderen Medien von außen wird dadurch erzielt, daß eine zähe Flüssigkeit, eine feinkörnige Substanz oder ein Puder mit quellfähigen Eigenschaften verwendet werden. Bei Eintritt von zum Beispiel Wasser quillt dann die zähe Flüssigkeit, die feinkörnige Substanz bzw. der Puder auf und dichtet somit zwischen den Membranwänden in Richtung zum strangförmigen Gegenstand ab. Dieser Quellvorgang kann auch bei Zutritt anderer Medien als Wasser eingeleitet werden, etwa bei Zutritt anderer flüssiger Medien.

Auch bei einer Membran, zwischen deren Membranwänden ein festes Abdichtmittel bzw. eine zähe Flüssigkeit vorhanden ist, kann sich bereits in der Membran eine Öffnung befinden, die im Querschnitt kleiner ist als der Querschnitt des durch sie hindurchzuführenden strangförmigen Gegenstands. In diesem Fall ist die Membran als eine Art Ringkammer zur Aufnahme des festen Abdichtmittels bzw. der zähen Flüssigkeit ausgebildet. Wird der mit größerem Querschnitt versehene strangförmige Gegenstand durch die Membranöffnung hindurchgeführt, weitet sich die Membranöffnung auf und die Membranwände kommen eng am strangförmigen Gut zu liegen. Auch der innerhalb der Membran zwischen den Membranwänden befindliche Verbindungskanal, der zunächst die kleinere Membranöffnung umfangsseitig begrenzt hat, wird nach außen geschoben und kommt über einen relativ großen Längsabschnitt des strangförmigen Gegenstands zu liegen, wobei er nicht nur durch seine Elastizität gegen den Umfang des strangförmigen Gegenstands gepreßt wird sondern auch durch das zwischen den Membranwänden befindliche feste Abdichtmittel bzw. durch die dort vorhandene zähe Flüssigkeit. Auf diese Weise kommt im Bereich des Verbindungskanals eine sehr gute Abdichtung auch gegen den Durchtritt von Feuchtigkeit bzw. Flüssigkeit gegenüber dem strangförmigen Gegenstand zustande. Auch hier können das feste Abdichtmittel bzw. die zähe Flüssigkeit quellfähige Eigenschaften aufweisen, um etwa bei einer unbeabsichtigten Beschädigung der Membran aufzuquellen und somit ein infolge der Beschädigung entstandenes Loch in der Membran zu verschließen.

Nach einer noch weiteren Ausgestaltung der Erfindung kann die Membran bei ihrer Montage auch trichterförmig verzogen und im Bereich der geringsten Trichterweite mit dem Gegenstand verklemmt werden. Zu diesem Zweck kann nach Montage des Trägerrahmens der Gegenstand noch ein wenig bewegt werden, um die trichterförmige Ausbildung der Membran zu bewirken. Danach können eine Klemme oder ein Band, oder dergleichen, um den Membran mit der geringsten Trichterweite herumgelegt werden, um den Klemmeffekt zu erzielen.

Eine erfindungsgemäße Vorrichtung zum Abdichten eines Raums zwischen einer in einem Bauelement vorhandenen Durchführung und wenigstens einem die Durchführung durchragenden Gegenstand zeichnet sich dadurch aus, daß sie einen die Durchführung einschließenden Trägerrahmen aufweist, der eine elastische Membran aufspannt, durch die der Gegenstand hindurchführbar ist.

Der Trägerrahmen, der zum Beispiel aus Kunststoff, Metall oder einem anderen geeigneten Material bestehen kann, schließt die Durchführung in dem Sinne ein, daß er ihre Austrittsöffnung im Bauelement vollständig umschließt, so daß die Austrittsöffnung auch durch die vom Trägerrahmen getragene elastische Membran vollständig abgedeckt wird. Der Trägerrahmen kann umfangsseitig mit einem Dichtungsring bzw. mit einer Dichtungslippe verbunden sein, um den Spalt zwischen ihm und dem Bauelement, auf dessen Ebene er zu liegen kommt, abzudichten. Die Montage des Trägerrahmens am Bauelement kann dabei durch geeignete Befestigungsmittel erfolgen. Alternativ kann der Trägerrahmen aber auch mit einer klebrigen Beschichtung versehen sein, so daß er dichtend mit dem Bauelement verklebt werden kann. Dies erleichtert seine Montage erheblich. Die klebrige Beschichtung kann durch einen Kunststoffstreifen geschützt sein, der von der klebrigen Beschichtung abgezogen wird, bevor der Trägerrahmen auf das Bauelement aufgesetzt wird.

Die Membranwände der Membran bestehen aus elastischem Material und können sowohl bei Vorliegen nur einer Membranwand als auch bei Vorliegen von mehreren Membranwänden aus zum Beispiel Gummi, einer elastischen Kunststofffolie, und dergleichen, bestehen. Allerdings muß das Material der Membranwände neben der erforderlichen Elastizität die Eigenschaft aufweisen, daß es beim Durchstoßen durch den strangförmigen Gegenstand nicht ausgehend von diesem radial zerreißt. Als zwischen den Membranwänden befindliches Abdichtmittel kommen eine zähe Flüssigkeit, ein feinkörniges Pulver oder ein Puder, oder dergleichen, in Frage. Diese Materialien können auch quellfähige Eigenschaften aufweisen, um bei Berührung mit Feuchtigkeit, Wasser oder anderen Medien, die einen Aufquellvorgang einleiten können, etwa anderen Flüssigkeiten, aufzuquellen. Als zähe Flüssigkeit kommt vorzugsweise ein Gel bzw. ein Hydrogel zum Einsatz.

Wie bereits eingangs erwähnt, kann die Membran beim Einführen des strangförmigen Gegenstands trichterförmig verzogen werden, um im Bereich der geringsten Trichterweite mit dem Gegenstand verklemmt zu werden. Möglich ist es aber auch, die Membran von vornherein schon als eine Art Trichter auszubilden, derart, daß sich der Bereich mit dem geringsten Trichterquerschnitt immer noch elastisch an den strangförmigen Gegenstand anschmiegt, nachdem dieser durch den Trichter hindurchgeführt worden ist. Dadurch läßt sich die Dichtfläche zwischen Membran und strangförmigem Gegenstand in Längsrichtung des strangförmigen Gegenstands vergrößern, was zu einer ebenfalls guten Abdichtung führt. Gegebenenfalls könnte der Trichter in seinem Bereich mit geringster Trichterweite noch zusätzlich mit dem strangförmigen Gegenstand verklemmt werden.

Nach einer vorteilhaften Weiterbildung der erfindungsgemäßen Vorrichtung ist der Trägerrahmen außerdem mit in die Durchführung einführbaren Positionierungselementen zur Positionierung des Trägerrahmens relativ zur Durchführung bzw. zur Positionierung des Gegenstands relativ zum Trägerrahmen verbunden. Dadurch läßt sich ein Verrutschen des Trägerrahmens relativ zum Bauelement verhindern, während andererseits verhindert wird, daß sich der strangförmige Gegenstand relativ zur Membran in deren Radialrichtung verschiebt, was zu einer ungleichmäßigen Belastung der Membran im Umfangsbereich ihrer Durchführung führen würde und damit ggf. zu ungleichmäßigen Dichtwirkungen. Das Vorsehen der Positionierungselemente gewährleistet somit eine noch bessere Dichtwirkung der erfindungsgemäßen Vorrichtung. Dabei können die Positionierungselemente zum Beispiel in Form von Federbügeln ausgebildet sein, was eine einfachere Positionierung des Trägerrahmens relativ zum Bauelement auch bei verschieden großen Durchführungen ermöglicht. Da die Federbügel elastisch sind, können dann auch strangförmige Gegenstände mit unterschiedlichem Querschnitt relativ zum Trägerrahmen bzw. zur Membran positioniert werden.

Die Zeichnung stellt Ausführungsbeispiele der Erfindung dar. Es zeigen:
**Figur 1** eine erfindungsgemäße Abdichtvorrichtung nach einem ersten Ausführungsbeispiel kurz vor dem Aufsetzen auf ein Bauelement;
**Figur 2** die Abdichtvorrichtung nach Figur 1, aufgesetzt auf ein Bauelement sowie mit hindurchtretendem strangförmigen Gegenstand;
**Figur 3** einen Axialschnitt durch die Anordnung nach Figur 2;
**Figur 4** ein zweites Ausführungsbeispiel einer erfindungsgemäßen Abdichtvorrichtung mit trichterförmig ausgebildeter Membran; und
**Figur 5** die Abdichtvorrichtung nach Figur 4 mit hindurchgeführtem strangförmigen Gegenstand.

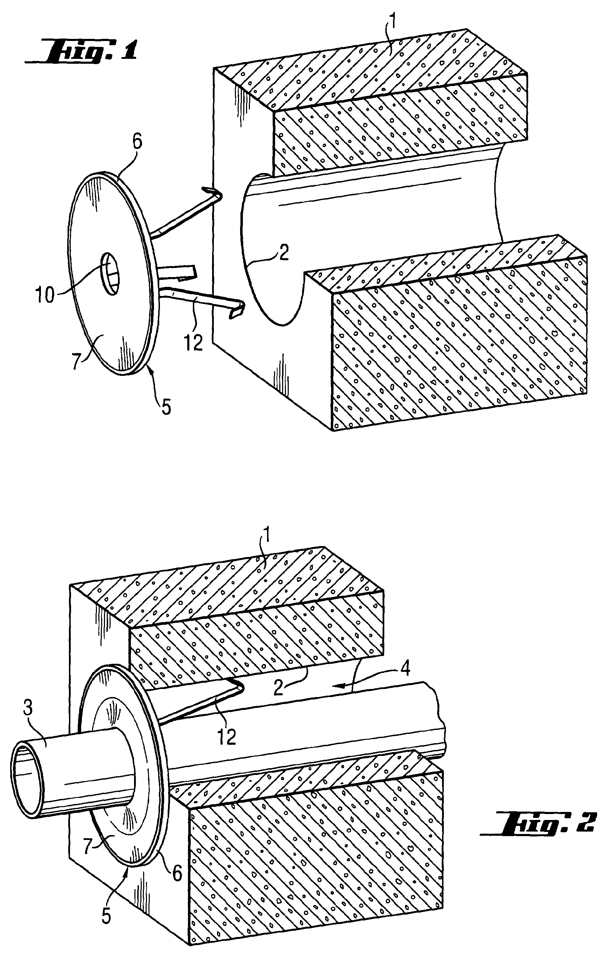

Die Figuren 1 bis 3 zeigen ein Bauelement 1, das etwa die Wand eines Gebäudes sein kann. Innerhalb dieses Bauelements 1 befindet sich eine Durchführung 2 mit einem mehr oder weniger bekannten Innendurchmesser. Diese Durchführung 2 ist im wesentlichen hohlzylindrisch ausgebildet. Es kann sich aber auch um eine Durchführung mit unregelmäßigem Querschnitt handeln. Durch die Durchführung 2 läuft ein strangförmiger bzw. zylindrischer Gegenstand 3 hindurch, der etwa ein Kabel, ein Rohr, oder dergleichen, sein kann. Dabei kommt zwischen der Innenwandung der Durchführung 2 und dem strangförmigen Gegenstand 3 ein Ringspalt 4 zu liegen.

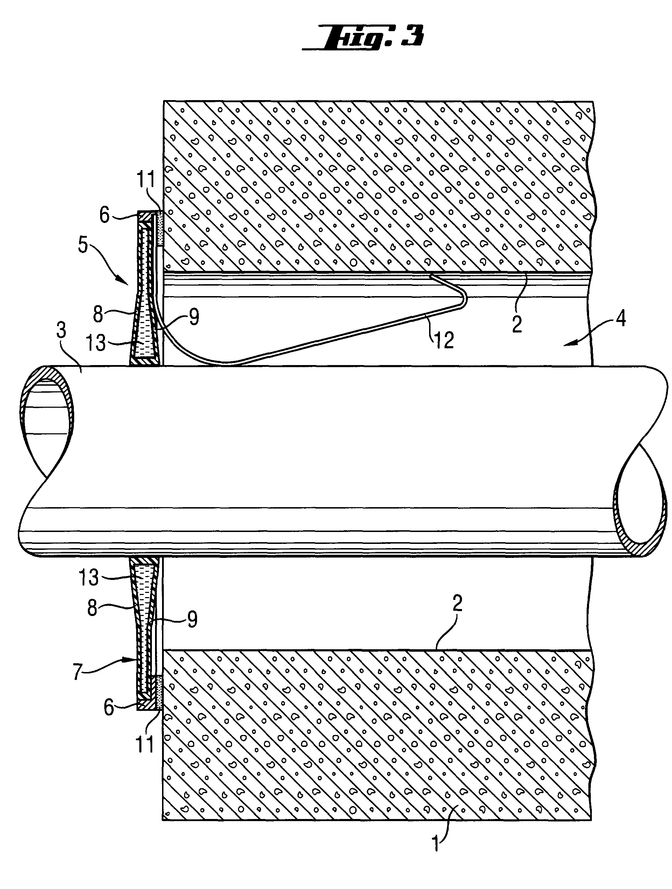

In den Figuren 1 bis 3 ist weiterhin eine membranförmige Abdichtvorrichtung 5 zu erkennen. Diese Abdichtvorrichtung 5 besteht aus einem kreisförmigen Trägerrahmen 6, der zum Beispiel aus Kunststoff, Metall, oder dergleichen, gefertigt sein kann. Dieser Trägerrahmen 6 spannt eine Membran 7 zwischen sich auf. Die Membran 7 ist elastisch ausgebildet und weist zwei elastische Membranwände 8 und 9 auf, die in geringem Abstand parallel zueinander liegen und innerhalb der Ebene des Trägerrahmens 6 angeordnet sind. Die Membran 7 weist eine mittige Durchgangsöffnung 10 auf, die sich dadurch ergibt, daß die Membranwände 8 und 9 mit jeweils einer entsprechenden Durchgangsöffnung versehen sind, deren Ränder über Membranwandmaterial miteinander in Verbindung stehen. Mit anderen Worten besteht die Membran 7 aus einem kreisringartigen Hohlraum, der einerseits von den Membranwänden 8 und 9 und andererseits durch den die Durchgangsöffnung 10 begrenzenden Materialsteg sowie den Trägerrahmen 6 begrenzt ist. Die Durchgangsöffnung 10 weist einen Innendurchmesser auf, der kleiner ist als der Außendurchmesser des strangförmigen Gegenstands 3, der durch die Durchgangsöffnung 10 hindurchgeschoben werden soll. Der die Durchgangsöffnung 10 begrenzende Membranwandmaterialsteg kann einstückig mit den Membranwänden 8 und 9 hergestellt sein und die gleiche Dicke wie diese aufweisen. Er kann auch aus demselben Material wie die Membranwände 8 und 9 bestehen. Er weist somit ebenfalls elastische Eigenschaften auf und kann sich daher eng um den strangförmigen Gegenstand 3 herumlegen. Dieser Zustand ist in den Figuren 2 und 3 gezeigt.

Innerhalb der Membran 7 bzw. zwischen den Membranwänden 8 und 9 befindet sich eine zähe Flüssigkeit 13, in diesem Fall ein Hydrogel. Durchdringt der strangförmige Gegenstand 3 die Membran 7, hat er also die Durchgangsöffnung 10 aufgeweitet, verkleinert sich das Membranvolumen für die zähe Flüssigkeit 13, so daß zusätzlich Druck auch auf denjenigen Wandbereich der Membran 7 ausgeübt wird, der auf dem strangförmigen Gegenstand 3 aufliegt, wodurch sich eine noch bessere Abdichtwirkung der Membran 7 ergibt.

Mit dem Trägerrahmen 6 ist an einer Seite der Membran 7 ein Dichtring 11 verbunden, der im vorliegenden Fall als klebrige Beschichtung ausgebildet ist, die am Trägerrahmen 6 haftet. Über diese klebrige Beschichtung 11 ist der Trägerrahmen 6 mit einer Fläche des Bauelements 1 fest und dichtend verbindbar, durch die die Durchführung 2 hindurchtritt. Dabei ist der Durchmesser des Trägerrahmens 6 größer als der Innendurchmesser der Durchführung 2, so daß die durch den Trägerrahmen 6 aufgespannte Membran 7 die Durchführung 2 vollständig abdecken kann.

Am Trägerrahmen 6 sind weiterhin Federbügel 12 befestigt, und zwar in Umfangsrichtung gesehen drei Stück unter gleichen Winkelabständen. Die Federbügel 12 verlaufen zunächst radial nach innen und sind dann in derselben Axialrichtung so umgebogen, daß sie zunächst wieder nach außen verlaufen, und zwar unter Entfernung vom Trägerrahmen 6, um schließlich an ihren Enden nach außen in Richtung zum Trägerrahmen 6 zurückgebogen zu sein. Die freien Enden der Federbügel 12 können sich somit einerseits an der Innenwandung der Durchführung 2 abstützen, wobei sie innerhalb des Spalts 4 zu liegen kommen, während sie sich gleichzeitig mit ihrem nahe der Membran 7 liegenden konvexen Bereich auf dem strangförmigen Gegenstand 3 abstützen bzw. diesen über den konvexen Bereich positionieren.

Die Montage der Abdichtvorrichtung 5 erfolgt so, daß zunächst eine Schutzschicht von der klebrigen Beschichtung 11 abgezogen wird, wonach die Abdichtvorrichtung 5 mit ihren Federbügeln 12 in die Durchführung 2 hineingeschoben wird, bis die klebrige Beschichtung 11 mit der Wand des Bauelements 1 in Berührung kommt. Der Trägerrahmen 6 wird dann gegen die Wand des Bauelements 1 gepreßt, so daß eine feste und dichte Verbindung zwischen Trägerrahmen 6 und Bauelement 1 erhalten wird. Der Trägerrahmen 6 wird dabei über die Federbügel 12 relativ zur Durchführung 2 positioniert, so daß der Trägerrahmen 6 konzentrisch zur Durchführung 2 zu liegen kommt. Die Federbügel 12 stützen sich zu diesem Zweck mit ihren freien Enden an der Innenwand der Durchführung 2 entsprechend ab. Anschließend wird der strangförmige Gegenstand 3, etwa ein Kabel oder Rohr, unter Aufweitung der Durchgangsöffnung 10 durch die Membran 7 hindurch und in die Durchführung 2 hineingeschoben. Dies erfolgt also von links in den Figuren 1 bis 3. Dabei preßt die Membran 7 dichtend gegen den strangförmigen Gegenstand 3, so daß insgesamt eine sehr gute Abdichtung des ringförmigen Spalts 4 erhalten wird.

In Abwandlung der Abdichtvorrichtung 5 in den Figuren 1 bis 3 können die Membranwände 7 und 8 auch geschlossen sein und ein Abdichtmittel zwischen sich aufnehmen. Hier kann es sich um das Abdichtmittel 13 handeln, also um die zähe Flüssigkeit bzw. ein Hydrogel. Die Montage der Abdichtvorrichtung 5 erfolgt zunächst in der oben beschriebenen Weise, bis der Trägerrahmen 6 fest am Bauelement 1 sitzt. Danach wird mit Hilfe des strangförmigen Gegenstands 3, der in die Durchführung 2 eingeführt werden soll, die Membran 7 durchstochen. Dies erfolgt vorzugsweise in Richtung zum Bauelement 1. Der strangförmige Gegenstand 3 wird dann in seiner Endlage positioniert. Aufgrund der Elastizität der Membranwände sowie aufgrund der Verdrängung der Abdichtflüssigkeit innerhalb der Membran baut sich ein innerer Druck zwischen den Membranwänden auf, wodurch zum strangförmigen Gegenstand 3 hin abgedichtet wird.

Die Abdichtflüssigkeit kann im zuletzt genannten Fall, aber auch in dem zuerst beschriebenen Fall quellfähig sein, so daß bei einer Verletzung der Membranwände ein eventueller Eintritt von Wasser oder eines anderen Mediums zu einem Aufquellen der Abdichtflüssigkeit führt und dadurch die Beschädigung kompensiert wird. Ein derartiger Aufquelleffekt kann aber auch im Umfangsbereich des strangförmigen Guts gewünscht sein, um einen noch besseren Abdichteffekt zu erzielen, wenn Feuchtigkeit, Wasser oder ein anderes den Quellvorgang einleitendes Medium im Bereich zwischen Membranwand und strangförmigem Gegenstand 3 ins Innere der Membran 7 gelangen sollte.

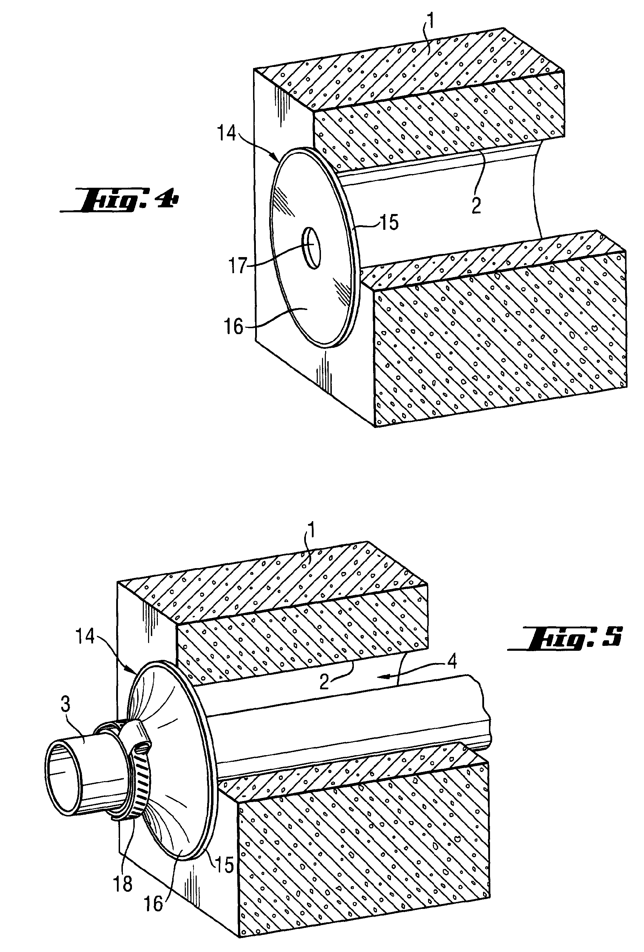

Eine weitere Ausführungsform einer erfindungsgemäßen Abdichtvorrichtung ist in den Figuren 4 und 5 dargestellt.

Diese Abdichtvorrichtung trägt das Bezugszeichen 14 und weist einen Trägerring 15 auf, der wie der Trägerring 6 beim ersten Ausführungsbeispiel ausgebildet sein kann und der auch, wie hier nicht dargestellt, mit den Federbügeln 12 verbunden sein kann. Der Trägerring 15 ist also über eine nicht dargestellte klebrige Beschichtung mit dem Bauelement 1 derart fest und dichtend verbunden, daß er konzentrisch zur Durchführung 2 zu liegen kommt und diese umgibt. Dabei nimmt der Trägerring 15 eine Membran 16 auf, die zum Beispiel aus einer Gummiwand besteht, welche eine zentrale Durchgangsöffnung 17 aufweist. Der Durchmesser der zentralen Durchgangsöffnung 17 ist dabei kleiner als der Außendurchmesser des strangförmigen Gegenstands 3, der durch die Durchgangsöffnung 17 hindurchgeschoben werden soll.

Die Figur 5 zeigt einen Zustand, bei dem der strangförmige Gegenstand 3 durch die Membran 16 hindurchgeschoben worden ist. Der strangförmige Gegenstand 3 wird in Figur 5 zunächst von links her durch die Membran 16 hindurchgeführt, wobei diese zurückweicht bzw. vom strangförmigen Gegenstand 3 aufgrund von Reibung mitgenommen wird. Die Membran 16 bildet somit eine trichterförmige Haut aus. Diese liegt aufgrund ihrer Elastizität fest am strangförmigen Gegenstand 3 an und dichtet gegen diesen ab. Durch Zurückziehen des strangförmigen Gegenstands 3 nach links in Figur 5 stülpt sich der Trichter nach außen um. Zur Fixierung der Membran am strangförmigen Gegenstand 3 kann eine Schelle 18 oder ähnliches dienen, die im Bereich des geringsten Trichterdurchmessers um diesen herumgelegt wird, um auf diese Weise die Membran 16 dort mit dem strangförmigen Gegenstand 3 zu verklemmen. Dies dient zur Verstärkung des Anpressens auf den strangförmigen Gegenstand 3 und kann auch ein Herausziehen des Gegenstands 3 aus der Durchführung 2 verhindern. Wie bereits erwähnt, können auch hier zur Zentrierung des strangförmigen Gegenstands 3 relativ zum Trägerring 15 bzw. zur Zentrierung des Trägerrings 15 relativ zur Durchführung 2 entsprechende Federbügel mit dem Trägerring 15 verbunden sein, die sich an der Innenwandung der Durchführung 2 abstützen.

## Patentansprüche

1. Verfahren zum Abdichten eines Raums (4) zwischen einer in einem Bauelement (1) vorhandenen Durchführung (2) und wenigstens einem die Durchführung (2) durchragenden Gegenstand (3), **dadurch gekennzeichnet, daß** die Durchführung (2) durch eine von einem Trägerrahmen (6; 15) aufgespannte elastische Membran (7; 16) abgedeckt wird, indem der Trägerrahmen (6; 15) mit dem Bauelement (1) dichtend verbunden wird, und daß anschließend der Gegenstand (3) durch die Membran (7; 16) hindurchgeführt wird.

2. Verfahren zum Abdichten eines Raums (4) zwischen einer in einen Bauelement (1) vorhandenen Durchführung (2) und wenigstens einem die Durchführung (2) durchragenden Gegenstand (3), **dadurch gekennzeichnet, daß** auf ein Ende des die Durchführung (2) durchragenden Gegenstands (3) eine von einem Trägerrahmen (6; 15) aufgespannte elastische Membran (7; 16) derart aufgesetzt wird, daß sie der Gegenstand (3) durchsetzt, und daß anschließend der Trägerrahmen (6; 15) mit dem Bauelement (1) dichtend verbunden wird.

3. Verfahren nach Anspruch 1 oder 2, **dadurch gekennzeichnet, daß** als Membran (16) eine solche mit wenigstens einer Membranwand zum Einsatz kommt.

4. Verfahren nach Anspruch 1 oder 2, **dadurch gekennzeichnet, daß** als Membran (7) eine solche mit mehreren im Abstand zueinanderliegenden Membranwänden (8, 9) zum Einsatz kommt, zwischen denen sich ein festes Abdichtmittel bzw. eine zähe Flüssigkeit (13) befindet.

5. Verfahren nach Anspruch 3 oder 4, **dadurch gekennzeichnet, daß** beim Hindurchführen des Gegenstands (3) durch die Membran (7; 16) hindurch die an sich geschlossenen Membranwände zerstört werden.

6. Verfahren nach Anspruch 3 oder 4, **dadurch gekennzeichnet, daß** der Gegenstand (3) durch eine bereits in der Membran (7; 16) vorhandene Öffnung (10; 17) hindurchgeführt wird, die kleiner ist als er.

7. Verfahren nach Anspruch 5 oder 6, **dadurch gekennzeichnet, daß** die Membran (16) trichterförmig verzogen und im Bereich der geringsten Trichterweite mit dem Gegenstand (3) verklemmt wird.

8. Verfahren nach einem der Ansprüche 1 bis 7, **dadurch gekennzeichnet, daß** der Trägerrahmen (6; 15) mit dem Bauelement (1) verklebt wird.

9. Vorrichtung zum Abdichten eines Raums (4) zwischen einer in einem Bauelement (1) vorhandenen Durchführung (2) und wenigstens einem die Durchführung (2) durchragenden Gegenstand (3), **gekennzeichnet durch** einen die Durchführung (2) einschließenden Trägerrahmen (6; 15), der eine elastische Membran (7; 16) aufspannt, **durch** die der Gegenstand (3) hindurchführbar ist.

10. Vorrichtung nach Anspruch 9, **dadurch gekennzeichnet, daß** die Membran (16) wenigstens eine Membranwand aufweist.

11. Vorrichtung nach Anspruch 9, **dadurch gekennzeichnet, daß** die Membran (7) mehrere im Abstand zueinanderliegende Membranwände (8, 9) aufweist, zwischen denen sich ein festes Abdichtmittel oder eine zähe Flüssigkeit (13) befindet.

12. Vorrichtung nach Anspruch 10 oder 11, **dadurch gekennzeichnet, daß** die Membranwände an sich geschlossen und durch den Gegenstand (3) zerstörbar sind.

13. Vorrichtung nach Anspruch 10 oder 11, **dadurch gekennzeichnet, daß** die Membran (7; 16) mit einer Öffnung (10; 17) versehen ist, durch die der Gegenstand (3) hindurchführbar ist, und die kleiner als der Gegenstand (3) ist.

14. Vorrichtung nach Anspruch 10 und 13, **dadurch gekennzeichnet, daß** die Membran trichterförmig ausgebildet ist.

15. Vorrichtung nach einem der Ansprüche 9 bis 14, **dadurch gekennzeichnet, daß** der Trägerrahmen (6; 15) an einer seiner seitlichen Umfangsflächen eine Dichtung (11) trägt.

16. Vorrichtung nach Anspruch 15, **dadurch gekennzeichnet, daß** die Dichtung (11) als klebrige Beschichtung ausgebildet ist.

17. Vorrichtung nach einem der Ansprüche 11 bis 16, **dadurch gekennzeichnet, daß** das feste Abdichtmittel eine feinkörnige Substanz oder ein Puder ist.

18. Vorrichtung nach einem der Ansprüche 11 bis 16, **dadurch gekennzeichnet, daß** die zähe Flüssigkeit (13) ein Gel bzw. Hydrogel ist.

19. Vorrichtung nach einem der Ansprüche 11 bis 18, **dadurch gekennzeichnet, daß** das feste Abdichtmittel bzw. die zähe Flüssigkeit (13) quellfähig sind.

20. Vorrichtung nach einem der Ansprüche 9 bis 19, **dadurch gekennzeichnet, daß** sie eine Klemme (18) aufweist, um den dem Gegenstand (3) benachbarten Membranbereich mit dem Gegenstand (3) zu verklemmen.

21. Vorrichtung nach einem der Ansprüche 9 bis 20, **dadurch gekennzeichnet, daß** der Trägerrahmen (6; 15) mit in die Durchführung (2) einführbaren Positionierungselementen (12) zur Positionierung des Trägerrahmens (6; 15) relativ zur Durchführung (2) bzw. des Gegenstands (3) relativ zum Trägerrahmen (6; 15) verbunden ist.

22. Vorrichtung nach Anspruch 21, **dadurch gekennzeichnet, daß** die Positionierungselemente (12) Federbügel sind.
